(19)

Europäisches
Patentamt
European
Patent Office
Office européen
des brevets

(11) **EP 4 290 290 B1**

(12) **EUROPEAN PATENT SPECIFICATION**

(45) Date of publication and mention
of the grant of the patent:
**18.09.2024 Bulletin 2024/38**

(51) International Patent Classification (IPC):
**G02B 21/00** (2006.01)   **G01N 21/21** (2006.01)
**G02B 21/36** (2006.01)

(21) Application number: **22178098.4**

(22) Date of filing: **09.06.2022**

(52) Cooperative Patent Classification (CPC):
**G02B 21/367; G01N 21/21; G02B 21/0068;**
G01N 2201/1053; G02B 21/0092; G02B 2207/114

(54) **METHOD FOR FAST DETERMINATION OF ULTRASTRUCTURAL PARAMETERS USING POLARIMETRIC SECOND HARMONIC GENERATION MICROSCOPY**

VERFAHREN ZUR SCHNELLEN BESTIMMUNG VON ULTRASTRUKTURELLEN PARAMETERN MITTELS POLARIMETRISCHER FREQUENZVERDOPPLUNGSMIKROSKOPIE

PROCÉDÉ DE DÉTERMINATION RAPIDE DE PARAMÈTRES ULTRASTRUCTURAUX PAR MICROSCOPIE POLARIMÉTRIQUE DE SECONDE GÉNÉRATION D'HARMONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2023 Bulletin 2023/50**

(73) Proprietor: **Vilnius University**
**01513 Vilnius (LT)**

(72) Inventors:
- **Barzda, Virginijus**
  **Vilnius (LT)**
- **Kontenis, Lukas**
  **Vilnius (LT)**
- **Maciulis, Mykolas**
  **Vilnius (LT)**
- **Mazeika, Viktoras**
  **Vilnius (LT)**

(74) Representative: **Pakeniene, Ausra**
**AAA Law**
**A. Gostauto street 40B**
**03163 Vilnius (LT)**

(56) References cited:
- **GOLARAEI, A. ET AL.: "Collagen chirality and three-dimensional orientation studied with polarimetric second-harmonic generation microscopy", J. BIOPHOTONICS, vol. 12, 2019, XP002808006**
- **TOKARZ DANIELLE ET AL: "Characterization of pathological thyroid tissue using polarization-sensitive second harmonic generation microscopy", LABORATORY INVESTIGATION, NATURE PUBLISHING GROUP, THE UNITED STATES AND CANADIAN ACADEMY OF PATHOLOGY, INC, vol. 100, no. 10, 31 July 2020 (2020-07-31), pages 1280 - 1287, XP037248559, ISSN: 0023-6837, [retrieved on 20200731], DOI: 10.1038/S41374-020-0475-7**
- **CISEK RICHARD ET AL: "Visualization of Potato Starch Chirality with Polarization Second Harmonic Generation Microscopy", 2021 PHOTONICS NORTH (PN), IEEE, 31 May 2021 (2021-05-31), pages 1, XP034021687, DOI: 10.1109/PN52152.2021.9597939**

**Description**

TECHNICAL FIELD

The invention relates to a method for fast determination of ultrastructural parameters and in particular using polarimetric second harmonic generation microscopy for second harmonic generation of fibrillar structures with C6 symmetry.

BACKGROUND ART

Cancer is one of the major causes of death, affecting approximately 1 in 5 people worldwide [1], and predicted to increase around 47% by 2040 [1]. The gold standard histopathology method for cancer diagnostics is considered to be hematoxylin and eosin (H&E) stained tissue sections examined with white light microscope. H&E histopathology diagnostics employs predominantly the characteristics and distribution of cell nuclei and the overall tissue morphology. The ultrastructure of the collagen-rich extracellular matrix (ECM) can also serve as additional biomarker. Collagen undergoes major structural alterations during tumorigenesis [2] and can be used for cancer diagnostics in histopathology. Several stains are used to reveal the structure of collagen, including Movat's pentachrome [3], Masson's trichrome [4], immunohistochemical [5] and picrosirius red [6].

Nevertheless, alterations of collagen are not widely applied for cancer diagnostics in part due to low specificity and uniform appearance after staining in histopathology images.

Second-harmonic generation (SHG) microscopy enables label-free imaging of collagen in ECM [7, 8]. The SHG depends on inherent 3D structure of collagen fibrils, which are characterized by the nonlinear susceptibility tensor [9]. Polarimetric SHG (P-SHG) microscopy has been utilized to measure the nonlinear susceptibility tensor elements and revealed ECM alterations in several human tumor tissues including lung [10], thyroid [11], breast [12, 13, 14], pancreas [15], and ovary [16]. However, current P-SHG microscopy is slow, requiring measurements of many polarization states and fitting of polarimetric data with intensity equation model for each pixel of the image. The data processing may take tenths of minutes for 128x128 pixel images using current desktop computers.

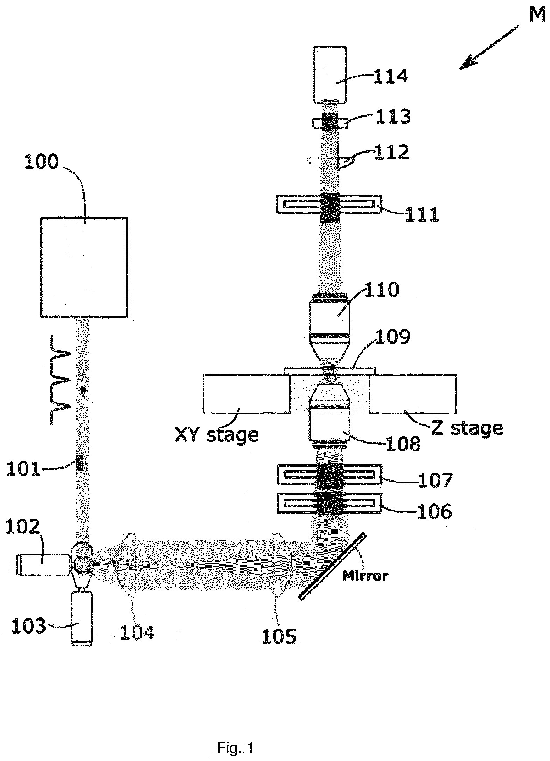

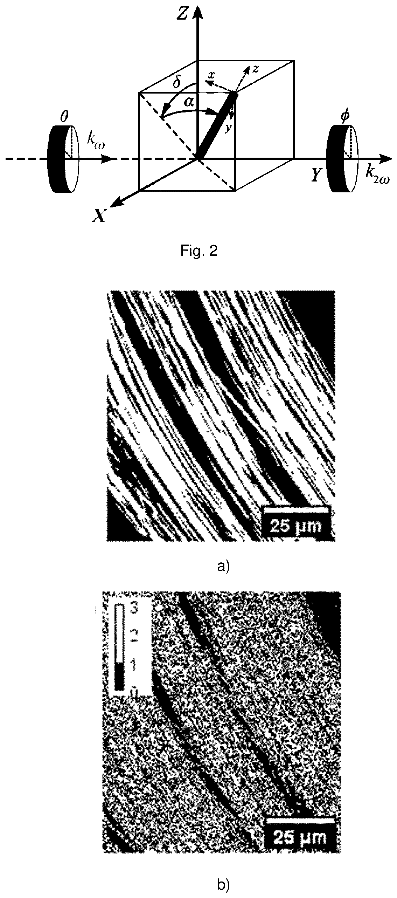

A schematic of a known microscope [17, 12] used for polarimetric second-harmonic generation (SHG) microscopy is presented in Fig. 1. A laser beam (101) of 1030nm wavelength from a femtosecond (or picosecond) laser oscillator (100) with typical characteristics of 1 00fs pulse duration and 76 MHz pulse repetition rate is coupled into a nonlinear microscope. The laser beam (101) is directed to scanning mirrors (102, 103), then passed through a scan lens (104) and a tube lens (105) and is directed to an entrance aperture of microscope objective (108). The laser beam (101) is focused into a sample (109) and raster scanned with scanning mirrors (102, 103) for imaging. The generated second harmonic signal from the sample (109) is collected in forward direction by collection objective (110) and focused with a lens (112) to a photomultiplier tube (PMT) detector (114). A polarization insensitive PMT (114) is used for the SHG signal detection. The SHG filters (113) are inserted in front of the PMT (114) to separate SHG signal from the laser beam (101). For linear polarization control of laser beam (101), a linear polarizer (106) and a half wave plate (HWP) (107) is inserted between the excitation objective (108) and the tube lens (105). This configuration provides with linear polarization states for the polarization state generator (PSG). For measuring outgoing linear polarization states of the signal, a linear polarizer (111) is inserted after the collection lens (110). The linear polarizer (111) represents the polarization state analyzer (PSA). The linear polarization orientations of PSG and PSA are calibrated to match the same initial positions. The polarization orientations are set at increments of 45 degrees from -45 to 90 degrees from vertical orientation axis of a produced image: Z laboratory axis, as shown in Fig 2 [18]. For obtaining achiral nonlinear susceptibility tensor component ratio Rand chiral nonlinear susceptibility component ratio C, the incoming polarizations of laser beam (101) are set at vertical linear polarization (VLP), horizontal linear polarization (HLP), polarization with plus 45 degrees orientation (+45) and minus 45 degree orientation (-45). For each of the laser polarization state, the generated second harmonic signal is probed with linear polarizations at VLP, HLP, +45 and -45 orientation positions. All described polarization states, 16 in total, are used for fitting data, to obtain the R and C susceptibility ratios.

US patent No. US1 1010881 discloses a method and apparatus for performing patterned microscopy. The method includes obtaining a microscopy image of an object based on optical signal from the object in response to a first incoming optical beam; and obtaining a contrast-enhancing image based on optical signal from the object in response to a second incoming optical beam. The method also includes generating a patterned mask based on the contrast-enhancing image. The method further includes applying the patterned mask on the microscopy image to obtain a patterned microscopy image. The microscopy image includes a polarization-analyzed reflection confocal microscopy image. The contrast-enhancing image includes a second-harmonic generation microscopy image. The patterned microscopy image includes a second-harmonic patterned polarization-analyzed reflection confocal microscopy image. The disclosed method produces SHG images but does not provide with ultrastructural parameters of Rand C ratio of susceptibility tensor elements.

US patent No. US7805183 discloses methods and systems for evaluating biological materials for the diagnosis of disease, such as gland abnormalities, and the cancerous and precancerous conditions. Nonlinear optical microscopy techniques, such as MP microscopy and harmonic generation microscopy, are used to generate high resolution, three dimensional images of a test tissue, such as a biopsy tissue sample and tissue in whole organisms, that are analyzed, optionally in combination, to detect, identify and characterize tumor-associated collagen signatures. The presence, abundance and extent of histological features and structural motifs comprising tumor-associated collagen signatures may be directly and accurately correlated with the onset and progression of cancer, such as breast cancer. In this invention tumor-associated collagen signatures are correlated with onset and progression of cancer. The tumor-associated collagen signatures are based on the visual features appearing in the images, which can be subjective. The tumor-associated collagen signatures are not physically measured ultrastructural parameters, and therefore require taking and visually interpret a high-resolution image.

The present invention is dedicated to overcoming of the above shortcomings and for producing further advantages over prior art.

BRIEF DESCRIPTION OF THE INVENTION

The invention is a method for performing polarimetric second-harmonic generation (P-SHG) microscopy, providing label-free visualization and ultrastructural characterization of non-centrosymmetric materials such as collagen in the biological tissues. The method comprises performing polarimetric measurement, employing linear incident and outgoing polarization states to obtain ultrastructural parameters that characterize collagen structure within focal volume of the microscope. The combined intensities at different linear polarization states provide the polarization parameters that are independent of collagen orientation and allow to calculate the ultrastructural parameters of achiral nonlinear susceptibility tensor component ratio R and chiral nonlinear susceptibility component ratio C.

The reduced polarimetry method for second harmonic generation of fibrillar structures with C6 symmetry comprises achiral susceptibility components Xzzz, Xzxx and Xxxz as real valued, while chiral tensor component Xxyz as complex valued. Two combinations of linear incident and outgoing polarization states are revealed that provides fibrillar orientation independent determination of susceptibility component ratios: R=Xzzz/Xzxx, and C=Xxyz/Xzxx. The ratios can be calculated without fitting, providing a substantial decrease in computer processing time and resulting in quick determination of Rand C ratio maps of collagen in an imaged biological tissue. The obtained maps can be used to assess changes in tissue collagen induced by tumorigenesis.

BRIEF DESCRIPTION OF THE DRAWINGS

Features of the invention believed to be novel and inventive are set forth with particularity in the appended claims. The invention itself, however, may be best understood by reference to the following detailed description of the invention, which describes exemplary embodiments, given in non-restrictive examples, of the invention, taken in conjunction with the accompanying drawings, in which:

Fig. 1      shows outline of the laser scanning polarimetric SHG microscope setup used for taking measurements for the method according to the invention.

Fig.2       shows polarization configuration for incident and outgoing polarizations. The laboratory Cartesian coordinate axes are labeled X, Y, Z. The local Cartesian coordinate system associated with fiber is xyz, where fiber axis is along z direction. The incident polarization angle $\theta$ and outgoing polarization $\phi$ are shown from the Z axis. The orientation angle of fiber is $\delta$, from Z axis, and $\alpha$ angle from XZ image plane.

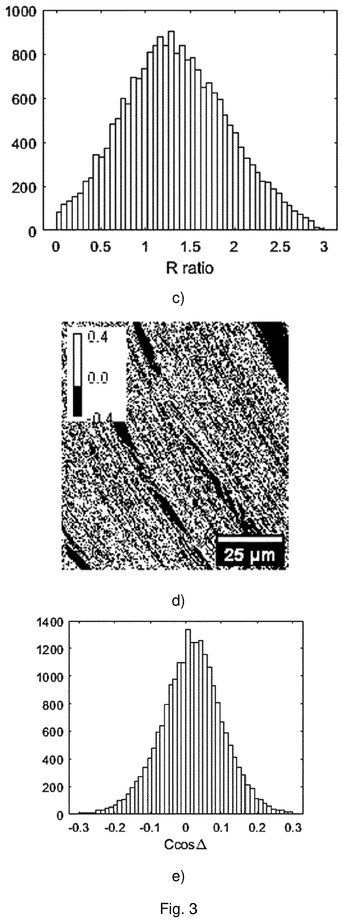

Fig. 3      shows polarimetric SHG microscopy imaging of rat tail tendon with collagen fibers oriented parallel to the image plane. Fig. 3 (a) represents SHG intensity map obtained using method according to the invention. Fig. 3 (b) shows the R ratio map and the Fig. 3 (c) presents the R ratio histogram obtained using method according to the invention. Fig. 3 (d) represents the C ratio map and Fig. 3 (e) shows a histogram of the C ratio image obtained using method according to the invention. In this particular example, the R values are distributed around value 1.4. For the C ratio calculated in terms of $Ccos\Delta$, the values are distributed around 0.

Preferred embodiments of the invention will be described herein below with reference to the drawings. Each figure contains the same numbering for the same or equivalent element.

DETAILED DESCRIPTION OF THE INVENTION

It should be understood that numerous specific details are presented in order to provide a complete and comprehensible description of the invention embodiment. However, the person skilled in art will understand that the embodiment examples do not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

According to one embodiment of the invention, the method for fast determination of ultrastructural parameters using polarimetric second harmonic generation microscopy for second harmonic generation of fibrillar structures with C6 symmetry comprises providing a laser beam source (100) and a microscope (M) for polarimetric second-harmonic generation (SHG) microscopy, for example as shown in Fig. 1. A laser beam (101) of 1030nm wavelength from a femtosecond laser oscillator or picosecond laser oscillator (100) with 100fs pulse duration and 76 MHz pulse repetition rate is coupled into a nonlinear microscope (M). The laser beam (101) is directed to scanning mirrors (102, 103), then passed through a scan lens (104) and a tube lens (105) and is directed to entrance aperture of objective (108) of the microscope (M). The laser beam (101) is focused into a sample (109) and raster scanned with scanning mirrors (102, 103) for imaging. The generated second harmonic signal from the sample (109) is collected in forward direction by a collection objective (110) and focused with a lens (112) to a photomultiplier tube (PMT) detector (114). A polarization insensitive PMT (114) is used for the SHG signal detection. The SHG filters (113) are inserted in front of the PMT (114) to separate SHG signals from the laser beam (101).

For linear polarization control, a linear polarizer (106) and a half wave plate (HWP) (107) is inserted between the excitation objective (108) and the tube lens (105). This configuration provides with linear polarization states for the polarization state generator (PSG). For measuring outgoing linear polarization states of the signal, a linear polarizer (111) is inserted after the collection lens (110). The linear polarizer (110) represents the polarization state analyzer (PSA). The linear polarization orientations of PSG and PSA are calibrated to match the same initial positions.

The described polarimetric microscope (M) is set to measure intensities at specific linear input polarization states and outgoing polarization states which are suitable for use for calculation according to the method of the invention. The necessary incident linear polarization orientation is determined by the half wave plate orientation angle $\theta$ in the PSG and the outgoing polarization orientation is set with rotating the polarizer by an angle $\phi$ in the PSA.

According to prior art, in polarization-in polarization-out (PIPO) measurements various input and outgoing polarization orientation can be obtained. The polarization orientations can be set at increments as shown in Fig 2, of, for example 45 degrees, for example from -45 to 90 degrees from the vertical orientation axis of a produced image for obtaining R and C ratios of nonlinear susceptibility tensor components. For example, the incoming polarizations of laser beam can be set at vertical linear polarization (VLP), horizontal linear polarization (HLP), polarization with plus 45-degree orientation (+45) and minus 45-degree orientation (-45). For each of the laser polarization state, the generated second harmonic is probed with linear polarizations at VLP, HLP, +45 and -45 orientation positions. In total, 16 combinations of incident and outgoing polarization states are obtained. All 16 polarization states are used for fitting the data with intensity equation model for each pixel of the image resulting in prolonged time of data processing for calculation of ultrastructural parameters of fibrillar structures with C6 symmetry.

The SHG intensity dependence on the incident (superscript "in") and outgoing polarization orientation (subscript "out"), $I_{out}^{in}$, can be expressed with known equation [9]:

$$I_{out}^{in} \propto \left| K \sin(\phi - \delta) \sin 2(\theta - \delta) + \cos(\phi - \delta) \sin^2(\theta - \delta) + R \cos(\phi - \delta) \cos^2(\theta - \delta) \right.$$
$$\left. + 2C e^{i\Delta} \cos(\theta - \delta) \sin(\theta - \phi) \right|^2$$

where [18]:

$$R = \frac{|\chi_{zzz}|}{|\chi_{zxx}|} \cos^2 \alpha + \left( 1 + 2 \frac{|\chi_{xxz}|}{|\chi_{zxx}|} \right) \sin^2 \alpha$$

$$C = \frac{|\chi_{xyz}|}{|\chi_{zxx}|} \sin \alpha$$

$$K = \frac{|\chi_{xxz}|}{|\chi_{zxx}|} = 1$$

where $\chi_{ijk}$ are the susceptibility tensor components in the local (molecular) reference frame system xyz. The polarization orientation angle $\theta$ and outgoing polarization orientation angle $\phi$ are with the laboratory Z axis. The orientation angle $\delta$ of the fiber is from laboratory Z axis. The retarancy between achiral and chiral susceptibility component is $\Delta$. The ultrastructural parameters R and C are obtained from the fitting of data to the equation $I_{out}^{in}$ shown above. The R and C parameters depend on the collagen fiber structure and the configuration of the collagen fibers in each focal volume of the image. R parameter characterizes achiral properties of collagen associated with nonlinear dipole orientations within the fibril. C ratio reflects the chiral organization of the fibrils.

A method for extracting R ratio and C ratio values from the linear polarization-in polarization-out (PIPO) measurements further comprise steps according to the method of the invention allowing to calculate the R and C parameters without fitting resulting in reduced time for obtaining the R and C ratio images.

The 16 instances of intensities $I_{out}^{in}$ measured at different incident and outgoing polarization states which are usually used for fitting as described in the previous example with PIPO equation, are grouped into two sets, each comprising 8 states. A first set is used to obtain the $R$ values. After grouping, sum of SHG intensities at four parallel incident and outgoing orientations for HLP, VLP, +45 and -45 is obtained by:

$$S_{\parallel} = I_{HLP}^{HLP} + I_{VLP}^{VLP} + I_{+45}^{+45} + I_{-45}^{-45}$$

A similar sum of intensities is obtained for four crossed polarization orientations by:

$$S_{\perp} = I_{VLP}^{HLP} + I_{HLP}^{VLP} + I_{-45}^{+45} + I_{+45}^{-45}$$

Subsequently a difference between the summed intensities $S_{\parallel}$ and $S_{\perp}$ for four parallel and four crossed states is obtained. Normalizing to the sum of all eight states provides parameter $L$, independent of the fiber orientation angle $\delta$. The parameter $L$ can be expressed in terms of R and $C^2$ ratios. The expression is as follows:

$$L = \frac{S_{\parallel} - S_{\perp}}{S_{\parallel} + S_{\perp}} = \frac{2(R+1)^2 - 16C^2}{3R^2 + 2R + 7 + 16C^2} \approx \frac{2(R+1)^2}{3R^2 + 2R + 7}$$

The R ratio is calculated which is used to characterize ultrastructural parameters of collagen in tissue. When $(R + 1)^2 >> 8C^2$ the $8C^2$ are ignored, the ratio $R$ is calculated from $L$ as follows:

$$R = \frac{-(L-2) \pm 2\sqrt{-5L^2 + 4L}}{(3L-2)}$$

From the two solutions, the appropriate sign is used for R value to be in the range of 0<R<3. The R equation is used to calculate the R ratio for each pixel of the image, and each pixel value is used to make an image of R ratio map for imaged tissue. In this way a direct calculation of R is performed. In this particular example, it takes less than a minute to take corresponding pixel intensity values from each of 8 images of specified polarization states and calculate $S_{\parallel}$ and $S_{\perp}$ and then calculate $L$ from which then to calculate R. From calculated R values of each pixel the R ratio image is constructed. While prior art method requires fitting 16 polarization states with PIPO equation to calculate R for each pixel, and then construct R-ratio image. The prior art procedure takes more than 10 min on the same conventional desktop computer.

The second set of 8 polarization states is used to calculate the C ratio. For the calculation of C ratio, the R ratio value is used, which is calculated from the first set of 8 polarization states described above. Four intensities at polarization states with counterclockwise rotation going from incident to outgoing polarization are used to calculate $S_{+}$ and the sum of intensities can be added as follows:

$$S_+ = I_{+45}^{HLP} + I_{-45}^{VLP} + I_{VLP}^{+45} + I_{HLP}^{-45}.$$

The other set of four states, each going clockwise from incident to outgoing polarization, are used to calculate $S_-$:

$$S_- = I_{+45}^{VLP} + I_{-45}^{HLP} + I_{HLP}^{+45} + I_{VLP}^{-45}$$

The $S_+$ and $S_-$ are used to calculate parameter T, which can be expressed in terms of $R$ and $C \cos \Delta$ ultrastructural parameters as follows:

$$T = \frac{S_+ - S_-}{S_+ + S_-} = \frac{12 C \cos \Delta\,(R + 1)}{3R^2 + 2R + 7 + 16C^2}$$

The $C \cos \Delta$ ultrastructure parameters can be calculated from T parameter with equation given above. The R ratio values are taken from the calculations of the first set of 8 parametric states. The T parameter enables to measure the chirality of the fibers. L and T parameters are used to calculate the parameters that are less dependent on scattering background during measurements according to the following equation:

$$\frac{T}{L} = \frac{12 C \cos \Delta\,(R + 1)}{2(R + 1)^2 - 16C^2} \approx \frac{6 C \cos \Delta}{(R + 1)}$$

The $\frac{T}{L}$ provides with the ratio between the two parameters C and R that characterize the ultrastructure of the tissue collagen.

An example of application of polarimetric SHG imaging is presented for rat tail tendon. Fig. 3a shows SHG intensity image. The stripy appearance in the SHG image reveals collagen fibers oriented parallel to the image plane. The R ratio map is presented in Fig 3b. The image shows rather homogeneous distribution of R ratio values, which is expected for the rat tail collagen sample with fiber orientation in the image plane. The histogram of R ratio values is shown in Fig. 3c. The distribution of R ratio values across the image peaks around R=1.4, which is characteristic for the rat tail tendon sample. The C-ratio map is shown in Fig 3d and its histogram in Fig. 3e. The C values in the image are distributed around 0, which is expected for the collagen sample with fibrils oriented in the image plane. The calculation of R and C ratio maps took less than a minute which is multiple times quicker than fitting procedure used for obtaining Rand C ratio maps from the same measured combination of images with linear polarization states used for PIPO SHG microscopy measurements.

Although numerous characteristics and advantages together with structural details and features have been listed in the present description of the invention, the description is provided as an example fulfilment of the invention. Without departing from the principles of the invention, there may be changes in the details, especially in the form, size and layout, in accordance with most widely understood meanings of the concepts and definitions used in claims.

Non-patent literature citations

[1] Sung, H. et al.. Global cancer statistics 2020: GLOBOCAN estimates of incidence and mortality worldwide for 36 cancers in 185 countries. CA Cancer J. Clin. 1-41, (2021).

[2] Frantz, C., Stewart K.M., \& Weaver V.M. The extracellular matrix at a glance. J Cell Sci., 4195-4200, (2010).

[3] Whatcott, C. et al.. Desmoplasia in Primary Tumors and Metastatic Lesions of Pancreatic Cancer. Clin. Cancer Res. 3561-3568, (2015).

[4] Rochette, A. et al.. Asporin is a stromally expressed marker associated with prostate cancer progression. Br. J. Cancer, 116 (6), 775-784, (2017).

[5] Zhou, Z.H. et al.. Reorganized Collagen in the Tumor Microenvironment of Gastric Cancer and Its Association with Prognosis. J. Cancer, 8 (8),1466-1476, (2017).

[6] Lattouf, R. et al.. Picrosirius Red Staining: A Useful Tool to Appraise Collagen Networks in Normal and Pathological Tissues. J. Histochem. Cytochem, 62(10), 751-758, (2014).

[7] Freund, I., Deutsch, M., \& Sprecher, A.. Connective tissue polarity. Optical second-harmonic microscopy, crossed-beam summation, and small-angle scattering in rat-tail tendon. Biophys. J., 50(4), 693-712, (1986).

[8] Campagnola, P. et al.. Three-Dimensional High-Resolution Second-Harmonic Generation Imaging of Endogenous Structural Proteins in Biological Tissues. Biophys. J., 82(1), 493-508, (2002).

[9] Golaraei, A. et al.. Complex susceptibilities and chiroptical effects of collagen measured with polarimetric second-harmonic generation microscopy. Sci Rep, 9, 2488, (2019).

[10] Golaraei, A. et al.. Characterization of collagen in non-small cell lung carcinoma with second harmonic polarization microscopy. Biomed Opt Express. 5(10), 3562-3567, (2014).

[11] Tokarz, D. et al.. Ultrastructural features of collagen in thyroid carcinoma tissue observed by polarization second harmonic generation microscopy. Biomed Opt Express. 6, 3475-3481, (2015).

[12] Golaraei, A. et al., Changes of collagen ultrastructure in breast cancer tissue determined by second-harmonic generation double Stokes-Mueller polarimetric microscopy., Biomed Opt Express., 7, 4054-4068, (2016).

[13] Mercatelli, R., Triulzi, T., Pavone, F., Orlandi, R., \& Cicchi, R., Collagen ultrastructural symmetry and its malignant alterations in human breast cancer revealed by polarization-resolved second-harmonic generation microscopy., J. Biophotonics, 13(8), e202000159, (2020).

[14] Tsafas, V. et al., Polarization-dependent second-harmonic generation for collagen-based differentiation of breast cancer samples., J. Biophotonics, 13(10), e202000180, (2020).

[15] Tokarz, D. et al., Characterization of pancreatic cancer tissue using multiphoton excitation fluorescence and polarization-sensitive harmonic generation microscopy., Front. Oncol., 9, 272, (2019).

[16] Campbell K.R., Chaudhary R., Handel J.M., Patankar M.S., \& Campagnola P.J., Polarization-resolved second harmonic generation imaging of human ovarian cancer., J Biomed Opt., 23(6), 1-8, (2018).

[17] Tuer, A., Krouglov, S., Prent, N., Cisek, R., Sandkuijl, D., Yasufuku, K., Wilson, B.C. and Barzda, V. Nonlinear Optical Properties of Type I Collagen Fibers Studied by Polarization Dependent Second Harmonic Generation Microscopy, J. Phys. Chem. B, 115:12759-12769, (2011).

[18] Golaraei, A. et al., Collagen chirality and three-dimensional orientation studied with polarimetric second-harmonic generation microscopy., J. Biophotonics., 12, e2018002417, 1-9, (2019).

## Claims

1. Method for determination of ultrastructural parameters using polarimetric second harmonic generation microscopy for second harmonic generation of fibrillar structures with C6 symmetry, the method comprising extracting achiral nonlinear susceptibility tensor component ratio R and chiral nonlinear susceptibility component ratio C values from sixteen instances of intensities $I_{out}^{in}$ measured at different incident and outgoing polarization states, where incoming polarizations of laser beam is set at vertical linear polarization (VLP), horizontal linear polarization (HLP), polarization with plus 45-degree orientation (+45) and minus 45-degree orientation (-45), where for each of the laser polarization state, the generated second harmonic is probed with linear polarizations at VLP, HLP, +45 and -45 orientation positions, **characterized in that** the method comprises

grouping measured intensity dependence $I_{out}^{in}$ of second-harmonic generation at different incident and outgoing polarization sixteen states into first group of eight states and second group of eight states comprising the specified polarization states,

using the first group of the measurements to obtain the R values for obtaining achiral susceptibility tensor component ratio R map

where first sum $S_{\parallel}$ of second-harmonic generation intensities of the first group at four parallel incident and outgoing orientations for HLP, VLP, +45 and -45 is obtained by calculating $S_{\parallel}$

$$S_{\parallel} = I_{HLP}^{HLP} + I_{VLP}^{VLP} + I_{+45}^{+45} + I_{-45}^{-45}$$

where second sum $S_{\perp}$ of second-harmonic generation intensities of the first group at four crossed polarization orientations is obtained by calculating $S_{\perp}$

$$S_{\perp} = I_{VLP}^{HLP} + I_{HLP}^{VLP} + I_{-45}^{+45} + I_{+45}^{-45},$$

calculating difference between the summed intensities $S_{\parallel}$ and $S_{\perp}$ for four parallel and four crossed states and normalizing to the sum of $S_{\parallel}$ and $S_{\perp}$ for obtaining a parameter $L$ independent of fiber orientation angle $\delta$

where the parameter $L$ is expressed in terms of $R$ and $C^2$ ratios, using

$$L = \frac{S_{\parallel} - S_{\perp}}{S_{\parallel} + S_{\perp}} = \frac{2(R+1)^2 - 16C^2}{3R^2 + 2R + 7 + 16C^2} \approx \frac{2(R+1)^2}{3R^2 + 2R + 7}$$

where when $(R+1)^2 >> 8C^2$ the $8C^2$ can be ignored, then $R$ is calculated from $L$, using

$$R = \frac{-(L-2) \pm 2\sqrt{-5L^2 + 4L}}{(3L-2)}$$

using the second set of eight polarization states for calculation of chiral susceptibility component ratio C map, here outgoing polarization states are as rotated by +45 or -45 degrees with respect to incoming polarization states,

adding four intensities at polarization states with counterclockwise rotation going from incident to outgoing polarization $S_+$, where the sum of intensities is $S_+$

$$S_+ = I_{+45}^{HLP} + I_{-45}^{VLP} + I_{VLP}^{+45} + I_{HLP}^{-45}$$

where going clockwise from incident to outgoing polarization the sum of intensities is $S_-$:

$$S_- = I_{+45}^{VLP} + I_{-45}^{HLP} + I_{HLP}^{+45} + I_{VLP}^{-45}$$

calculating parameter T in terms of $S_+$ and $S_-$ and then expressing the parameter T in terms of $R$ and $C \cos \Delta$ ultrastructural parameters by:

$$T = \frac{S_+ - S_-}{S_+ + S_-} = \frac{12C \cos \Delta \, (R+1)}{3R^2 + 2R + 7 + 16C^2}$$

where the T parameter and in turn $C \cos \Delta$ enables measuring the chirality of fibers;
using L and T parameters to calculate the parameters that are less dependent on scattering background during measurements according to the following equation:

$$\frac{T}{L} = \frac{12C\cos\Delta\,(R+1)}{2(R+1)^2 - 16C^2} \approx \frac{6C\cos\Delta}{(R+1)}$$

where the $\frac{T}{L}$ provides with the ratio between the two parameters C and R that characterize the ultrastructure of the tissue collagen.

**Patentansprüche**

1.  Verfahren zum Bestimmen von ultrastrukturellen Parametern mittels polarimetrischer Frequenzverdopplungsmikroskopie für eine Frequenzverdoppelung von fibrillären Strukturen mit C6-Symmetrie, wobei das Verfahren das Extrahieren von Werten eines achiralen nichtlinearen Suszeptibilitätstensorkomponentenverhältnisses R und eines chiralen nichtlinearen Suszeptibilitätskomponentenverhältnisses C aus sechszehn Instanzen von Intensitäten

    $I_{out}^{in}$, die in unterschiedlichen Zuständen einfallender und ausgehender Polarisation gemessen werden, wobei einfallende Polarisationen eines Laserstrahls auf vertikale lineare Polarisation (VLP), horizontale lineare Polarisation (HLP), Polarisation mit Plus-45-Grad-Ausrichtung (+45) und Minus-45-Grad-Ausrichtung (-45) festgelegt werden, wobei die Frequenzverdopplung für jeden Laserpolarisationszustand mit linearen Polarisationen in den Positionen VLP, HLP, +45- und -45-Ausrichtung untersucht wird, **dadurch gekennzeichnet, dass** das Verfahren umfasst:

    Gruppieren einer gemessenen Intensitätsabhängigkeit $I_{out}^{in}$ der Frequenzverdopplung in verschiedenen sechszehn Zuständen einfallender und ausgehender Polarisation in eine erste Gruppe von acht Zuständen und eine zweite Gruppe von acht Zuständen, die die spezifizierten Polarisationszustände umfassen,
    Verwenden der ersten Gruppe der Messungen, um die *R*-Werte unter Erhalt einer Karte des achiralen Suszeptibilitätstensorkomponentenverhältnisses R zu erhalten,

    wobei eine erste Summe $S_\parallel$ der Frequenzverdopplungsintensitäten der ersten Gruppe in vier parallelen einfallenden und ausgehenden Ausrichtungen für HLP, VLP; +45 und -45 erhalten wird, indem $S_\parallel$ berechnet wird,

    $$S_\parallel = I_{HLP}^{HLP} + I_{VLP}^{VLP} + I_{+45}^{+45} + I_{-45}^{-45}$$

    wobei eine zweite Summe $S_\perp$ der Frequenzverdopplungsintensitäten der ersten Gruppe in vier gekreuzten Polarisationsausrichtungen erhalten wird, indem $S_\perp$ berechnet wird,

    $$S_\perp = I_{VLP}^{HLP} + I_{HLP}^{VLP} + I_{-45}^{+45} + I_{+45}^{-45},$$

    Berechnen einer Differenz zwischen den summierten Intensitäten $S_\parallel$ und $S_\perp$ für vier parallele und vier gekreuzte Zustände und Normalisieren auf die Summe von $S_\parallel$ und $S_\perp$, um einen Parameter *L* zu erhalten, der von einem Faserausrichtungswinkel $\delta$ unabhängig ist,

    wobei der Parameter *L* in Bezug auf *R*- und *C*²-Verhältnisse ausgedrückt wird durch

    $$L = \frac{S_\parallel - S_\perp}{S_\parallel + S_\perp} = \frac{2(R+1)^2 - 16C^2}{3R^2 + 2R + 7 + 16C^2} \approx \frac{2(R+1)^2}{3R^2 + 2R + 7},$$

    wobei, wenn $(R+1)^2 \gg 8C^2$, $8C^2$ ignoriert werden kann, *R* sodann anhand von *L* berechnet wird durch

$$R = \frac{-(L-2) \pm 2\sqrt{-5L^2 + 4L}}{(3L-2)}$$

Verwenden des zweiten Satzes von acht Polarisationszustanden zum Berechnen einer Karte des chiralen Suszeptibilitätskomponentenverhältnisses C, wobei Zustände ausgehender Polarisation wie um +45 oder -45 Grad in Bezug auf Zustände einfallender Polarisation rotiert sind,

Hinzufügen von vier Intensitäten in Polarisationszuständen mit einer Rotation gegen den Uhrzeigersinn ausgehend von einfallender zu ausgehender Polarisation $S_+$, wobei die Summe von Intensitäten $S_+$ ist,

$$S_+ = I_{+45}^{HLP} + I_{-45}^{VLP} + I_{VLP}^{+45} + I_{HLP}^{-45}$$

wobei ausgehend von einfallender zu ausgehender Polarisation im Uhrzeigersinn die Summe von Intensitäten $S_-$ ist:

$$S_- = I_{+45}^{VLP} + I_{-45}^{HLP} + I_{HLP}^{+45} + I_{VLP}^{-45}$$

Berechnen eines Parameters T in Bezug auf $S_+$ und $S_-$ und dann Ausdrücken des Parameters T in Bezug auf die ultrastrukturellen Parameter $R$ und $C \cos\Delta$ durch:

$$T = \frac{S_+ - S_-}{S_+ + S_-} = \frac{12C\cos\Delta (R+1)}{3R^2 + 2R + 7 + 16C^2}$$

wobei der Parameter T und wiederum $C \cos\Delta$ das Messen der Chiralität von Fasern ermöglicht;
Verwenden der Parameter L und T, um die Parameter berechnen, die von einem Streuungshintergrund während Messungen weniger stark abhängig sind, gemäß der folgenden Gleichung:

$$\frac{T}{L} = \frac{12C\cos\Delta (R+1)}{2(R+1)^2 - 16C^2} \approx \frac{6C\cos\Delta}{(R+1)}$$

wobei $\frac{T}{L}$ das Verhältnis zwischen den zwei Parameters C und R vorsieht, die die Ultrastruktur des Gewebekollagens charakterisieren.

## Revendications

1. Procédé de détermination de paramètres ultrastructuraux par microscopie polarimétrique de seconde génération d'harmoniques pour une seconde génération d'harmoniques de structures fibrillaires présentant une symétrie C6, le procédé comprenant l'extraction de valeurs de rapport de composant de tenseur de susceptibilité non linéaire achiral R et de rapport de composant de susceptibilité non linéaire chiral C à partir de seize instances d'intensités $I_{out}^{in}$ mesurées à différents états de polarisation incidente et sortante, où des polarisations entrantes du faisceau laser sont réglées sur une polarisation linéaire verticale (VLP), une polarisation linéaire horizontale (HLP), une polarisation avec une orientation à plus 45 degrés (+45) et une orientation à moins 45 degrés (-45), où pour chacun des états de polarisation laser, la seconde harmonique générée est sondée avec des polarisations linéaires aux positions d'orientation VLP, HLP, +45 et -45, **caractérisé en ce que** le procédé comprend

le regroupement d'une dépendance à l'intensité mesurée $I_{out}^{in}$ de génération de seconde harmonique de seize états de polarisation incidente et sortante différents en un premier groupe de huit états et un second groupe de huit états comprenant les états de polarisation spécifiés, l'utilisation du premier groupe des mesures pour obtenir les valeurs *R* afin d'obtenir une carte de rapport de composant de tenseur de susceptibilité achiral R

où une première somme $S_\parallel$ d'intensités de génération de seconde harmonique du premier groupe à quatre orientations incidentes et sortantes parallèles pour HLP, VLP, +45 et -45 est obtenue en calculant $S_\parallel$

$$S_\parallel = I_{HLP}^{HLP} + I_{VLP}^{VLP} + I_{+45}^{+45} + I_{-45}^{-45}$$

où une seconde somme $S_\perp$ d'intensités de génération de seconde harmonique du premier groupe à quatre orientations de polarisation croisées est obtenue en calculant $S_\perp$

$$S_\perp = I_{VLP}^{HLP} + I_{HLP}^{VLP} + I_{-45}^{+45} + I_{+45}^{-45},$$

le calcul d'une différence entre les intensités additionnées $S_\parallel$ et Si pour quatre états parallèles et quatre états croisés et la normalisation à la somme de $S_\parallel$ et $S_\perp$ pour obtenir un paramètre *L* indépendant de l'angle d'orientation des fibres $\delta$

où le paramètre *L* est exprimé en termes de rapports *R* et $C^2$, à l'aide de

$$L = \frac{S_\parallel - S_\perp}{S_\parallel + S_\perp} = \frac{2(R+1)^2 - 16C^2}{3R^2 + 2R + 7 + 16C^2} \approx \frac{2(R+1)^2}{3R^2 + 2R + 7}$$

où quand $(R+1)^2 \gg 8C^2$, $8C^2$ peut être ignoré, alors *R* est calculé à partir de *L*, à l'aide de

$$R = \frac{-(L-2) \pm 2\sqrt{-5L^2 + 4L}}{(3L - 2)}$$

l'utilisation du second ensemble de huit états de polarisation pour le calcul de carte de rapport de composant de susceptibilité chiral C, où des états de polarisation sortante sont tournés de +45 ou -45 degrés par rapport aux états de polarisation entrante,

l'ajout de quatre intensités à des états de polarisation avec une rotation dans le sens inverse des aiguilles d'une montre allant de la polarisation incidente à la polarisation sortante $S_+$, où la somme d'intensités est $S_+$

$$S_+ = I_{+45}^{HLP} + I_{-45}^{VLP} + I_{VLP}^{+45} + I_{HLP}^{-45}$$

où, dans le sens des aiguilles d'une montre, de la polarisation incidente à la polarisation sortante, la somme d'intensités est $S_-$ :

$$S_- = I_{+45}^{VLP} + I_{-45}^{HLP} + I_{HLP}^{+45} + I_{VLP}^{-45}$$

le calcul d'un paramètre T en termes de $S_+$ et $S_-$ puis l'expression du paramètre T en termes de paramètres ultrastructuraux *R* et C cos $\Delta$ par :

$$T = \frac{S_+ - S_-}{S_+ + S_-} = \frac{12C \cos\Delta (R+1)}{3R^2 + 2R + 7 + 16C^2}$$

où le paramètre T et à son tour C cos $\Delta$ permettent de mesurer la chiralité des fibres ;

l'utilisation de paramètres L et T pour calculer les paramètres qui dépendent moins du fond de diffusion lors des mesures selon l'équation suivante :

$$\frac{T}{L} = \frac{12C \cos \Delta \, (R + 1)}{2(R + 1)^2 - 16C^2} \approx \frac{6C \cos \Delta}{(R + 1)}$$

où $\frac{T}{L}$ fournit le rapport entre les deux paramètres C et R qui caractérisent l'ultrastructure du collagène tissulaire.

Fig. 1

Fig. 2

a)

b)

c)

d)

e)

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11010881 B
- US 7805183 B

**Non-patent literature cited in the description**

- **SUNG, H. et al.** Global cancer statistics 2020: GLOBOCAN estimates of incidence and mortality worldwide for 36 cancers in 185 countries. *CA Cancer J. Clin,* 2021, 1-41
- **FRANTZ, C. ; STEWART K.M. ; WEAVER V.M.** The extracellular matrix at a glance. *J Cell Sci,* 2010, 4195-4200
- **WHATCOTT, C. et al.** Desmoplasia in Primary Tumors and Metastatic Lesions of Pancreatic Cancer. *Clin. Cancer Res.,* 2015, 3561-3568
- **ROCHETTE, A. et al.** Asporin is a stromally expressed marker associated with prostate cancer progression. *Br. J. Cancer,* 2017, vol. 116 (6), 775-784
- **ZHOU, Z.H. et al.** Reorganized Collagen in the Tumor Microenvironment of Gastric Cancer and Its Association with Prognosis. *J. Cancer,* 2017, vol. 8 (8), 1466-1476
- **LATTOUF, R. et al.** Picrosirius Red Staining: A Useful Tool to Appraise Collagen Networks in Normal and Pathological Tissues. *J. Histochem. Cytochem,* 2014, vol. 62 (10), 751-758
- **FREUND, I. ; DEUTSCH, M. ; SPRECHER, A..** Connective tissue polarity. Optical second-harmonic microscopy, crossed-beam summation, and small-angle scattering in rat-tail tendon. *Biophys. J.,* 1986, vol. 50 (4), 693-712
- **CAMPAGNOLA, P. et al.** Three-Dimensional High-Resolution Second-Harmonic Generation Imaging of Endogenous Structural Proteins in Biological Tissues. *Biophys. J.,* 2002, vol. 82 (1), 493-508
- **GOLARAEI, A. et al.** Complex susceptibilities and chiroptical effects of collagen measured with polarimetric second-harmonic generation microscopy. *Sci Rep,* 2019, vol. 9, 2488
- **GOLARAEI, A. et al.** Characterization of collagen in non-small cell lung carcinoma with second harmonic polarization microscopy. *Biomed Opt Express.,* 2014, vol. 5 (10), 3562-3567

- **TOKARZ, D. et al.** Ultrastructural features of collagen in thyroid carcinoma tissue observed by polarization second harmonic generation microscopy. *Biomed Opt Express.,* 2015, vol. 6, 3475-3481
- **GOLARAEI, A. et al.** Changes of collagen ultrastructure in breast cancer tissue determined by second-harmonic generation double Stokes-Mueller polarimetric microscopy. *Biomed Opt Express.,* 2016, vol. 7, 4054-4068
- **MERCATELLI, R. ; TRIULZI, T. ; PAVONE, F. ; ORLANDI, R. ; CICCHI, R.** Collagen ultrastructural symmetry and its malignant alterations in human breast cancer revealed by polarization-resolved second-harmonic generation microscopy. *J. Biophotonics,* 2020, vol. 13 (8), e202000159
- **TSAFAS, V. et al.** Polarization-dependent second-harmonic generation for collagen-based differentiation of breast cancer samples. *J. Biophotonics,* 2020, vol. 13 (10), e202000180
- **TOKARZ, D. et al.** Characterization of pancreatic cancer tissue using multiphoton excitation fluorescence and polarization-sensitive harmonic generation microscopy. *Front. Oncol.,* 2019, vol. 9, 272
- **CAMPBELL K.R. ; CHAUDHARY R. ; HANDEL J.M. ; PATANKAR M.S. ; CAMPAGNOLA P.J.** Polarization-resolved second harmonic generation imaging of human ovarian cancer. *J Biomed Opt.,* 2018, vol. 23 (6), 1-8
- **TUER, A. ; KROUGLOV, S. ; PRENT, N. ; CISEK, R. ; SANDKUIJL, D. ; YASUFUKU, K. ; WILSON, B.C. ; BARZDA, V.** Nonlinear Optical Properties of Type I Collagen Fibers Studied by Polarization Dependent Second Harmonic Generation Microscopy. *J. Phys. Chem. B,* 2011, vol. 115, 12759-12769
- **GOLARAEI, A. et al.** Collagen chirality and three-dimensional orientation studied with polarimetric second-harmonic generation microscopy. *J. Biophotonics.,* 2019, vol. 12, e2018002417, , 1-9